# EUROPÄISCHE PATENTANMELDUNG

(11) **EP 3 101 605 A1**
(43) Veröffentlichungstag der Anmeldung: **07.12.2016**
(21) Anmeldenummer: 15170837.7
(22) Anmeldetag: 05.06.2015
(51) Int. Cl.: G06Q 10/08, G07F 17/12, G07F 17/26

(54) **SYSTEM UND VERFAHREN FÜR DEN VERSAND VON POSTSENDUNGEN**

(71) Anmelder: Integer.pl S.A., 30-624 Krakow (PL)
(72) Erfinder: Jaroszuk-Rózycki, Maciej, 3392 Roedgen (LU)
(74) Vertreter: Kilchert, Jochen

(57) **Zusammenfassung**

Die vorliegende Erfindung betrifft ein System zum effizienten Versand von Postsendungen. Erfindungsgemäß umfasst das System:
- mindestens einen Gepäckautomaten mit mindestens einer Eingabeeinrichtung und/oder Erfassungseinrichtung zur Eingabe bzw. Erfassung einer Zieladresse und einer Vielzahl von Paketfächern zur Aufnahme einer Postsendung,
- mindestens eine Auftragsverwaltungseinrichtung zum Empfangen einer Anfrage des mindestens einen Gepäckautomaten,
wobei die Anfrage eine Zieladresse und eine Startadresse umfasst, wobei die Auftragsverwaltungseinrichtung dazu ausgebildet ist, anhand der Zieladresse und anhand der Startadresse mindestens eine Flugverbindung zu ermitteln und mit einem Flugverwaltungssystem zu kommunizieren, um mindestens eine Flugreservierung unter Verwendung von Flugdaten, die die Flugverbindung angeben vorzunehmen.

## Beschreibung

Die vorliegende Erfindung betrifft ein System und ein Verfahren für den Versand von Postsendungen.

Gepäckautomaten für Aufbewahrung und Entnahme von Luftsendungen und Luftgepäckstücken werden nach den Anforderungen von Fluggesellschaften ausgelegt (die Größe von Aufbewahrungsfächern entspricht der Größe eines Handgepäcks bzw. eines Hauptgepäcks). Die Gepäckautomaten enthalten verschiedene Kästen (Fächer) für die Aufbewahrung von Postsendungen und Kästen für die Aufbewahrung von Gegenständen mit Maßen, die den Maßen eines Luftgepäcks entsprechen, und ein Bedienpanel mit Eingabe- und Ausgabevorrichtungen, z.B. Bildschirm und Tastatur. Darüber hinaus weist das Bedienpanel ein eingebautes Barcodelesegerät auf, das es ermöglicht, auf Postsendungen angebrachte Kennzeichnungen, wie Etikette von Barcodes und/oder QR-Codes zu erfassen. Ein zusätzlicher Scanner / ein zusätzliches Lesegerät z.B. für Personalausweise und Pässe sorgt für Erkennung und Autorisation eines Anwenders.

Für eine sachgerechte Kennzeichnung der Luftsendungen kann im Bedienpanel ein Etikettendrucker vorgesehen sein, der es ermöglicht, mit der Vorrichtung ein Etikett auszudrucken und die Sendung im Standard IATA Cargo zu kennzeichnen.

Für den Transport von Postsendungen von einem Gepäckautomaten zu einem anderen und/oder zu einer bestimmten Adresse, werden die Gepäckautomaten regelmäßig von Paketabholern besucht. Die Aufgabe des Paketabholers ist es, Paketsendungen, die für den Versand aufgegeben wurden, abzuholen und solche, deren Zieladresse der Gepäckautomat ist, einzulegen/zu deponieren. Der Transport von einem Gepäckautomat zu einem anderen erfolgt meistens zentral. Das heißt, der Paketabholer entnimmt alle Pakete und bringt diese zu einem zentralen Postverteilerzentrum, wo diese sortiert und an einen anderen Paketabholer übergeben werden. Große Strecken können mittels Lastwagen und Zügen überbrückt werden. Bei einem Transport eines bestimmten Pakets über größere Strecken ist es meistens so, dass das Paket zuerst in eine erste Verteilerzentrale gebracht wird, von dort mit einer Vielzahl von anderen Paketen zu einer zweiten entfernten Verteilerzentrale und dann von Paketabholern direkt zu dem Ziel-Gepäckautomaten gebracht werden.

Ein Transport per Flugzeug über derart lange Strecken ist denkbar. Jedoch werden in diesem Szenario wiederum eine Vielzahl von Paketsendungen gesammelt und zu einer (Sammel-)Sendung zusammengefasst, die dann beispielsweise in einem Container innerhalb eines Flugzeugs transportiert wird. Dieser Container wird üblicherweise von einer ersten Verteilerzentrale abgesandt und trägt als Zieladresse eine zweite Versandzentrale. Diese Form des Transportes ist logistisch aufwändig und benötigt einen hohen Durchsatz, um kostendeckend durchgeführt zu werden.

Ausgehend von diesem Stand der Technik ist es Aufgabe der vorliegenden Erfindung, bekannte Systeme für den Versand von Postsendungen zu verbessern. Insbesondere soll der Versand von Postsendungen beschleunigt und im Wesentlichen vollständig automatisiert werden. Des Weiteren soll ein entsprechendes Verfahren angegeben werden.

Diese Aufgabe wird durch ein System gemäß dem Anspruch 1 sowie durch ein Verfahren gemäß dem Anspruch 11 gelöst.

Insbesondere wird die Aufgabe durch ein System für den Versand von Postsendungen gelöst, das umfasst:
- mindestens einen Gepäckautomaten mit mindestens einer Eingabeeinrichtung und/oder Erfassungseinrichtung zur Eingabe bzw. Erfassung einer Zieladresse und mit einer Vielzahl von Paketfächern zur Aufnahme einer Postsendung,
- mindestens eine Auftragsverwaltungseinrichtung zum Empfangen einer Anfrage des mindestens einen Gepäckautomaten,
wobei die Anfrage eine Zieladresse und eine Startadresse umfasst, wobei die Auftragsverwaltungseinrichtung dazu ausgebildet ist, anhand der Zieladresse und anhand der Startadresse mindestens eine Flugverbindung zu ermitteln und mit einem Flugverwaltungssystem zu kommunizieren, um mindestens eine Flugreservierung unter Verwendung von Flugdaten, die die Flugverbindung angeben, vorzunehmen.

Ein Aspekt der Erfindung besteht also darin, dass die Auftragsverwaltungseinrichtung zur Abwicklung des Versands der Postsendung mit einem Flugverwaltungssystem kommuniziert, um eine Beförderung der Postsendung per Flugzeug sicherzustellen. Hierbei werden Zieladresse und Startadresse verwendet, um eine geeignete Flugverbindung zu ermitteln. Es ist nicht zwangsläufig notwendig, dass die versendende Person die Startadresse liefert. Häufig kann die Startadresse eine Identifikationsnummer sein, die mit dem Gepäckautomaten verknüpft ist, von dem die Postsendung versandt wird. Auch bei der Zieladresse muss es sich nicht zwangsläufig um eine postalische Adresse handeln. Häufig reicht es aus, wenn als Zieladresse ein bestimmter Gepäckautomat identifiziert wird. Das erfindungsgemäße System ermöglicht es dezentral und effizient, einzelne Postsendungen mit dem Flugzeug zu versenden. Der Verwaltungsaufwand wird reduziert und die notwendige Transportzeit (von Gepäckautomat zu Gepäckautomat) verkürzt.

Die Eingabeeinrichtung und/oder Erfassungseinrichtung kann auch zur Eingabe bzw. Erfassung des Absenders, des Empfängers und/oder des Pakets (z.B. des Inhalts, des Gewichts, usw.) ausgebildet sein.

Der mindestens eine Gepäckautomat kann mindestens eine Wiegeeinrichtung zur Ermittlung eines Gewichts einer Postsendung umfassen. Insofern ist es möglich, dass der Gepäckautomat das Gewicht einer Postsendung vor, während und/oder nach dem Einlegen in ein Paketfach des Gepäckautomaten erfasst. Das Gewicht der Postsendung kann für die Bestimmung einer geeigneten Flugverbindung notwendig sein. Insofern kann die Auftragsverwaltungseinrichtung zur Vornahme der Flugreservierung das Gewicht der Postsendung an das Flugverwaltungssystem kommunizieren. Die Auftragsverwaltungseinrichtung und/oder der Gepäckautomat können das Gewicht des Weiteren dazu nutzen, um einen Beförderungstarif für die Postsendung zu ermitteln. Die Wiegeeinrichtung kann derart ausgebildet sein, dass das bestimmte Gewicht automatisch an den Gepäckautomaten und/oder die Auftragsverwaltungseinrichtung kommuniziert wird, so dass das aufwändige Eingeben eines Gewichts seitens des Benutzers vermieden werden kann.

Eine Vielzahl der Paketfächer eines Gepäckautomaten kann mit jeweils einer Wiegeeinrichtung zur Ermittlung eines Gewichts einer Postsendung ausgestattet sein. Insofern kann die Gewichtsbestimmung nach dem Einlegen der Postsendung in das jeweilige Paketfach erfolgen. Es ist denkbar, vor dem Wiegevorgang, z.B. durch das Vorsehen von geeigneten Sensoren, sicherzustellen, dass das jeweilige Paketfach geschlossen und ggf. verriegelt ist. So können Betrugsversuche bei der Angabe des Gewichts verhindert werden. Der mindestens eine Gepäckautomat kann dazu ausgebildet sein, ohne jegliche menschliche Interaktion jeder Postsendung automatisch ein bestimmtes Gewicht zuzuordnen und diese Information beim Transport der Postsendung zu berücksichtigen.

Das System kann mindestens eine Eingabeeinrichtung und/oder Erfassungseinrichtung zur Eingabe von Abmessungsdaten bzw. zur Ermittlung von Abmessungsdaten einer Postsendung umfassen. Theoretisch ist es denkbar, entsprechende Informationen vor dem Einlegen einer Postsendung in ein Paketfach per Terminal und/oder über ein mobiles Gerät und/oder einen privaten PC einzugeben. Vorzugsweise erfolgt jedoch eine automatische Erfassung der Abmessungsdaten. Die Auftragsverwaltungseinrichtung kann zur Vornahme der Flugreservierung die Abmessungsdaten der jeweiligen Postsendung an das Flugverwaltungssystem kommunizieren. Insofern können auch diese Daten für die Bestimmung einer geeigneten Flugverbindung berücksichtigt werden.

Der mindestens eine Gepäckautomat kann dazu ausgebildet sein, in Abhängigkeit von den Abmessungsdaten ein Paketfach zur Aufnahme der Postsendung auszuwählen und/oder zu öffnen. Es ist möglich, einen Gepäckautomaten mit unterschiedlich großen Paketfächern auszustatten, um den Platz innerhalb des Gepäckautomaten effizient zu nutzen. Insofern können angegebene Abmessungsdaten dazu verwendet werden, ein geeignetes Paketfach auszuwählen und dieses zum Einlegen der Postsendung zu öffnen. Alternativ kann es dem Benutzer ermöglicht werden, ein aus seiner Sicht geeignetes Paketfach auszuwählen, wobei über die Auswahl des Paketfachs Rückschlüsse auf die Abmessungsdaten der Postsendung geschlossen werden. So kann der Postsendung über die Auswahl des Paketfachs automatisch eine Abmessung zugeordnet werden. In diesem Fall kann das aufwändige Eingeben von genauen Längen-, Höhen- und/oder Breitenangaben unterbleiben.

Die Auftragsverwaltungseinrichtung kann dazu ausgebildet sein, anhand der Zieladresse und der Startadresse eine Vielzahl von Flugverbindungen zu ermitteln. Theoretisch ist es möglich, aus dieser Vielzahl von Flugverbindungen die auszuwählen, die einen bestimmten Parameter (Transportzeit, Ankunftszeit, Transportkosten, Platzverfügbarkeit) optimieren. Des Weiteren ist es möglich, dass der mindestens eine Gepäckautomat dazu ausgebildet ist, die Vielzahl von Flugverbindungen und/oder flugverbindungsspezifische Daten, insbesondere einen Transportpreis und/oder eine Ankunftszeit, anzuzeigen und eine Eingabe zur Auswahl der Flugverbindung aus der Vielzahl von Flugverbindungen zu empfangen. Beispielsweise können dem Benutzer, der die Postsendung aufgibt, mehrere mögliche Ankunftszeiten und die zugehörigen Preise, die für den Transport entstehen, angezeigt werden. Der Benutzer wählt dann die Flugverbindung aus, die seinen Wünschen entspricht.

Alternativ kann der Benutzer dazu befähigt werden, bestimmte Parameter vorab einzugeben, wobei das System dazu ausgebildet ist, diese bei dem Transport der Postsendung zu berücksichtigen. Beispielsweise kann der Benutzer angeben, dass eine bestimmte Postsendung schnellstmöglich bis zu einem maximalen Transportpreis von 10 oder 50 EUR zu transportieren ist. Alternativ könnte der Benutzer angeben, dass die Ankunftszeit weniger relevant ist, solange der Transportpreis unter 5 oder 20 EUR bleibt. Die Auftragsverwaltungseinrichtung kann diese Eingaben bei der Auswahl der Flugverbindung berücksichtigen. So ist es üblich, dass bei schlecht ausgelasteten Flugverbindungen der Transportpreis deutlich niedriger ist, als bei solchen, die ausgebucht sind. Das System ermöglicht es daher, vorhandene Ressourcen effizient auszunutzen, da dynamische Entscheidungen getroffen werden können. Alternativ oder zusätzlich kann das System dem Benutzer ermöglichen, eine optimale Versandart und/oder -route in Abhängigkeit von der Eiligkeit des Versands auszuwählen. In einem Ausführungsbeispiel erhält jedes Paket in Abhängigkeit von der ausgewählten Versandart (z.B. schnell, billig, kurze Flugzeit) eine Kennzeichnung, die eine spätere Auswahl des geeigneten Flugs ermöglicht.

Das System kann mindestens eine Druckeinrichtung, insbesondere einen QR-Code-Drucker und/oder einen Barcode-Drucker, zur Ausgabe einer Kennzeichnung umfassen. Entsprechende Kennzeichnungen können dazu eingesetzt werden, die Postsendung während ihres Versands eindeutig zu identifizieren. Entsprechende Kennzeichnungen können des Weiteren Zieladresse und/oder Startadresse kodieren. Letztendlich ist es denkbar, dass die Kennzeichnung bereits sämtliche für den Transport per Flugzeug relevante Informationen aufweist. Die Druckeinrichtung kann dazu ausgebildet sein, die Kennzeichnung vor einem Einlegen der Postsendung auszugeben, so dass diese von dem Benutzer aufgeklebt werden kann. Alternativ oder gleichzeitig (zusätzlich) ist es möglich, dass der Gepäckautomat dazu ausgebildet ist, die Kennzeichnung beim Abholen des Pakets durch den Paketabholer auszugeben, so dass dieser diese aufbringen kann. Des Weiteren können notwendige Formulare automatisch ausgefüllt und mittels eines Druckers ausgegeben werden.

Die Auftragsverwaltungseinrichtung kann dazu ausgebildet sein, vorzugsweise nach der Vornahme der Flugreservierung, Passagierdaten und/oder Frachtraumbelegungsdaten von dem Flugzeugverwaltungssystem abzufragen und basierend auf den Passagierdaten und/oder Frachtraumbelegungsdaten eine Buchung für eine Postsendung vorzunehmen. Theoretisch ist es beispielsweise möglich, dass die Auftragsverwaltungseinrichtung zunächst geeignete Flugverbindungen für den Transport einer bestimmten Postsendung ermittelt. Nach der Ermittlung dieser Flugverbindungen kann zu einem vorgegebenen Zeitintervall vor dem Abflugdatum der jeweiligen Flugverbindung kontrolliert werden, wie stark das entsprechende Flugzeug ausgelastet ist. Hierbei können Passagierdaten und/oder Frachtraumbelegungsdaten berücksichtigt werden. Die Auftragsverwaltungseinrichtung kann dann dynamisch bestimmen, ob eine bestimmte Postsendung mit einem bestimmten Flug transportiert werden soll. Bei dieser dynamischen Bestimmung können theoretisch Eingaben des Benutzers, z.B. finanzielle Vorgaben, Eiligkeit des Transports, usw. berücksichtigt werden. Die Auftragsverwaltungseinrichtung kann dann basierend auf den Passagierdaten und/oder Frachtraumbelegungsdaten eine Buchung und/oder eine Reservierung für eine bestimmte Postsendung vornehmen.

Die eingangs genannte Aufgabe wird des Weiteren durch ein System gelöst, das eines der bereits beschriebenen Versandsysteme sowie ein Flugverwaltungssystem umfasst. Das Flugverwaltungssystem kann mit mindestens einer Datenbank zum Speichern von Flugdaten und mit mindestens einer Schnittstelle zum Empfang von Flugreservierungen von der Flugverwaltungseinrichtung ausgestattet sein. Das Flugverwaltungssystem kann es ermöglichen, geeignete Verbindungen für eine bestimmte Postsendung zu evaluieren (aufzufinden und/oder bereitzustellen). Unter Berücksichtigung von in der Datenbank gespeicherten Informationen können Versanddauer, Ankunftszeit usw. berechnet werden.

Es ergeben sich ähnliche Vorteile, wie diese bereits in Verbindung mit dem vorab beschriebenen System genannt wurden.

Die Aufgabe wird des Weiteren durch ein Verfahren gelöst, das die folgenden Schritte umfasst:
a) Empfangen einer Anfrage eines Gepäckautomaten, wobei die Anfrage eine Zieladresse und eine Startadresse umfasst;
b) Ermitteln mindestens einer Flugverbindung durch eine Auftragsverwaltungseinrichtung unter Verwendung der Zieladresse und der Startadresse;
c) Durchführung einer Flugreservierung und/oder einer Flugbuchung unter Verwendung von Flugdaten, die die Flugverbindung angeben.

Das Verfahren kann auf einem der vorab beschriebenen Systeme ausgeführt werden. Das Verfahren eignet sich besonders dazu, einen schnellen und effizienten Transport der Postsendungen sicherzustellen, wobei der Laderaum der Flugzeuge optimal ausgenutzt wird.

Die Anfragen können des Weiteren Informationen bezüglich des Versenders und/oder bezüglich des Empfängers umfassen. Auch können Daten zu der Postsendung, z.B. dessen Gewicht und/oder Inhalt, enthalten sein.

Das Verfahren kann einen Schritt des Erfassens eines Gewichts einer Postsendung durch eine Wiegeeinrichtung umfassen. Des Weiteren kann ein Kommunizieren des Gewichts an die Auftragsverwaltungseinrichtung zur Durchführung der Flugreservierung und/oder Flugbuchung vorgesehen sein.

Vorzugsweise umfasst das Verfahren ein Erfassen von Abmessungsdaten der Postsendung, insbesondere durch ein Empfangen einer Auswahl einer Paketfachgröße an einem Gepäckautomaten.

Das Verfahren kann ein Ermitteln einer Ankunftszeit der Postsendung unter Verwendung der Flugdaten vorsehen. Des Weiteren kann ein Anzeigen der Ankunftszeit, vorzugsweise auf einer Anzeige des Gepäckautomaten, vorgenommen werden.

Das Verfahren kann auch Statusinformationen von einem/dem Flugverwaltungssystem abfragen und beispielsweise per SMS oder E-Mail an den Absender und/oder Empfänger weiterleiten.

Entsprechende Informationen können auch auf einer Webseite angezeigt und von einem Benutzer abgefragt werden. Vorzugsweise ist der Zugang zu der Webseite abgesichert. Zum Abfragen der Informationen, insbesondere bezüglich des Status, können auch mobile Endgeräte mit entsprechender Software, sogenannte "Apps" verwendet werden.

Die genannte Aufgabe wird des Weiteren durch ein computerlesbares Medium mit Instruktionen zur Implementierung eines der beschriebenen Verfahren gelöst.

Der mindestens eine Gepäckautomat kann eine Aufnahmeeinrichtung zur Aufnahme von Gegenständen, die bei einer Flughafen-Sicherheitskontrolle vom Sicherheitspersonal einbehalten wurden, aufweisen. Weiterhin kann der mindestens eine Gepäckautomat eine Einrichtung aufweisen, die es ermöglicht, aufgenommene Gegenstände zu registrieren sowie eine vorbestimmte Zeit zu deponieren. Nach Ablauf dieser Zeit kann ein Signal erzeugt werden und/oder eine entsprechende Information bereitgestellt werden, dass die Zeit abgelaufen ist. Daraufhin kann Personal den im Gepäckautomaten deponierten Gegenstand ggf. in ein Lager überführen. Vorzugsweise umfasst der mindestens eine Gepäckautomat eine Auswahleinrichtung zur Auswahl der Deponierungszeit des Gegenstands innerhalb des Gepäckautomats (beispielsweise 3, 7 oder 15 Tage). Vorzugsweise können mindestens zwei verschiedene Werte für die Deponierungszeit, weiter vorzugsweise mindestens drei verschiedene Werte, noch weiter vorzugsweise mindestens fünf verschiedene Werte eingestellt werden.

Insgesamt wird dadurch eine weitere Funktionalität bereitgestellt, die durch denselben Gepäckautomaten ermöglicht wird, wodurch der konstruktive Aufwand und insbesondere Platzbedarf reduziert wird.

Diesbezüglich ist festzustellen, dass oftmals Passagiere aus Versehen (als Handgepäck) nicht zugelassene Gegenstände durch die Sicherheitskontrolle mitnehmen (beispielsweise scharfe und/oder spitze Gegenstände und/oder Werkzeuge und/oder Schlittschuhe und/oder Skateboards und/oder Golfschläger und/oder Angeln etc.). Durch die hier vorgeschlagene Weiterbildung wird es ermöglicht, derartige Gegenstände schnell in der Zone der Sicherheitskontrolle zu hinterlassen. Verfahrensmäßig kann dazu in einem ersten Schritt der Gegenstand durch einen Mitarbeiter des Schutzdienstes (Sicherheitsdienstes) des Flughafens einbehalten werden und dann in dem mindestens einen Gepäckautomaten deponiert werden. Daraufhin kann eine Auswahl getroffen werden, wie lange der Gegenstand (beispielsweise 3, 7 oder 15 Tage) deponiert werden soll. Nach Ablauf dieser Zeit (oder ggf. auch in unmittelbarem Anschluss) kann der Gegenstand in ein weiteres Lager überführt werden (auch hier wäre es denkbar, dass bereits am Gepäckautomaten eine Deponierungszeit einstellbar ist, beispielsweise zwei verschiedene Deponierungszeiten oder mindestens drei verschiedene Deponierungszeiten). Der einbehaltene Gegenstand kann dann nach Ablauf einer gewissen Zeit (insbesondere der Deponierungszeit) wieder abgeholt werden. Insgesamt wird durch diese Funktionalität des Gepäckautomaten eine äußerst einfache Möglichkeite realisiert, einen Gegenstand, der die Sicherheitskontrolle nicht passieren konnte, wiederzuerlangen.

Grundsätzlich ist es besonders bevorzugt, wenn mindestens ein Gepäckautomat unmittelbar an (vor oder nach) einer Sicherheitskontrolle eines Flughafens aufgestellt wird.

Gemäß einer weiteren möglichen Ausführungsform des Gepäckautomats ist dieser dazu ausgelegt, in einer Duty-Free-Zone erworbene Gegenstände anzunehmen und/oder aufzubewahren. Hier ist es besonders bevorzugt, wenn der mindestens eine Gepäckautomat in der Duty-Free-Zone aufgestellt ist. Konkret kann der mindestens eine Gepäckautomat im Innenraum eines Abflugterminals aufgestellt sein. Insgesamt wird dadurch die Möglichkeit geschaffen, praktisch unbegrenzt in der zollfreien Zone einzukaufen und dann die erworbenen Gegenstände an beliebige Gepäckautomaten (weltweit) zu versenden.

Vorzugsweise weist der mindestens eine Gepäckautomat eine Aufnahmeeinrichtung zur Aufnahme eines in der zollfreien Zone erworbenen Gegenstands auf. Weiterhin kann der Gepäckautomat eine Eingabeeinrichtung aufweisen zur Eingabe von Informationen betreffend in der zollfreien Zone erworbenen Gegenständen, insbesondere betreffend eine Zieladresse des erworbenen Gegenstands. Im Einzelnen kann ein Verfahren zum Deponieren und Versenden von in der zollfreien Zone erworbenen Gegenständen wie folgt ablaufen:
Zunächst kauft ein Passagier bzw. Kunde eines Duty-Free-Shops in der zollfreien Zone einen Gegenstand. Der Kunde kann daraufhin ggf. entscheiden, ob der gekaufte Gegenstand an einen Gepäckautomaten auf dem Flughafen oder an einen Gepäckautomaten (mit Schließfächern) auf dem Staatsgebiet des jeweiligen Landes versandt wird. Der erworbene Gegenstand kann im Gepäckautomaten deponiert werden, der sich auf dem Gelände des Flughafens befindet. Eine Zieladresse des erworbenen Gegenstands kann eingegeben werden.

Daraufhin kann ggf. Logistik-Personal die deponierten Gegenstände vom Flughafen abholen. Wenn die Abnahmeadresse des Gegenstands hinterlegt ist, kann der Gegenstand in einen Bestimmungs-Gepäckautomaten auf einem Bestimmungsflughafen oder in einen anderen Bestimmungs-Gepäckautomaten (mit Schließfächern) platziert werden.

Der Kunde des Duty-Free-Shops kann daraufhin die Gegenstände aus dem (vorher) bestimmten Gepäckautomaten auf dem Flughafen oder einen sonstigen Gepäckautomaten (mit Schließfächern) abholen.

Der mindestens eine Gepäckautomat kann eine weitere Funktionalität dahingehend aufweisen, dass eine Autovermietung ermöglicht oder zumindest vereinfacht wird.

Insbesondere kann der Gepäckautomat eine Aufnahmeeinrichtung zur Aufnahme eines Autoschlüssels aufweisen. Es kann mindestens ein Autoschlüssel in dem Gepäckautomaten vorgesehen sein. Weiterhin kann die Aufnahmeeinrichtung für den Autoschlüssel (oder ggf. eine weitere Aufnahmeeinrichtung) zur Aufnahme von Dokumenten vorgesehen sein, die zum Führen des Fahrzeugs notwendig sind. Ein entsprechendes Verfahren zum Vermieten eines Autos kann wie folgt ablaufen:
Zunächst kann ein Autovermietungs-Kunde das Auto reservieren, beispielsweise indem er den Abholort (insbesondere einen Flughafen nennt). Die Reservierung kann dann ggf. an einen Mitarbeiter der Autovermietung gesendet werden. Dieser Mitarbeiter kann dann ggf. das Dokument, das zur Ausgabe des Autos notwendig ist, vorbereiten. Daraufhin kann in einem Gepäckautomaten eine Aufnahmeeinrichtung (Schließfach) reserviert werden. Der Mitarbeiter kann die Dokumente und/oder den Autoschlüssel in der Aufnahmeeinrichtung (Schließfach) deponieren.

Der Kunde kann (z.B. aufgrund von durch beispielsweise per SMS oder E-Mail von der Autovermietung erhaltene Informationen) eine Autorisierung im Gepäckautomaten auf dem Flughafen durchführen (z.B. eine Autorisierung aufgrund einer Telefonnummer und/oder eines Pin-Codes und/oder aufgrund von Dokumenten, die eine Identität bescheinigen). Nach der korrekten Autorisierung kann die Ausgabe der Dokumente und/oder des Schlüssels erfolgen.

Daraufhin kann dann der Kunde ggf. zum Parkplatz gehen, um das Auto abzuholen.

Insgesamt wird durch diese Funktionalität ein äußerst variabler Automat vorgeschlagen, der mehrere Funktionen gleichzeitig erfüllt, was den Platzbedarf am Flughafen reduziert.

Bei dem Gepäckautomaten kann es sich um einen Frachtautomaten und/oder Paketautomaten handeln.

Weitere vorteilhafte Ausführungsformen ergeben sich anhand der Unteransprüche.

Insgesamt ermöglicht es das beschriebene System bzw. Verfahren, eine Vielzahl von Dienstleistungen in Verbindung mit dem Transport von Postsendungen, auch Koffern und ähnlichen Gütern, bereitzustellen. Der hierfür notwendige logistische Aufwand wird minimiert, da die Auftragsverwaltungseinrichtung eine direkte Kommunikation mit dem Flugverwaltungssystem umsetzt. Die Qualität der erbrachten Dienstleistung kann erhöht und durch den Benutzer des Systems unmittelbar beeinflusst werden. Hinzu kommt, dass für den Benutzer/Kunden die Transparenz des bereitgestellten Dienstes erhöht wird. So kann das erfindungsgemäße System beim Aufgeben der Postsendung sowie zu jedem beliebigen späteren Zeitpunkt eine berechnete Ankunftszeit angeben.

Nachfolgend wird die Erfindung mittels mehrerer Ausführungsbeispiele beschrieben, die anhand von Abbildungen näher erläutert werden. Hierbei zeigen:
- Fig. 1: ein Versandsystem, das kommunikativ mit einem Mobiltelefon und einem Flugverwaltungssystem verbunden ist;
- Fig. 2: Komponenten eines Gepäckautomaten, wie er in dem Versandsystem gemäß Fig. 1 enthalten sein kann;
- Fig. 3: Komponenten eines anderen Gepäckautomaten, wie er in dem Versandsystem gemäß Fig. 1 enthalten sein kann;
- Fig. 4: Komponenten einer Auftragsverwaltungseinrichtung, wie sie in dem Versandsystem gemäß Fig. 1 enthalten sind;
- Fig. 5: ein erstes Aktivitätsdiagramm, das den Nachrichtenaustausch in einem ersten erfindungsgemäßen Ausführungsbeispiel zeigt; und
- Fig. 6: ein zweites Aktivitätsdiagramm, das den Nachrichtenaustausch in einem zweiten erfindungsgemäßen Ausführungsbeispiel zeigt.

In der nachfolgenden Beschreibung werden für gleiche und gleich wirkende Teile dieselben Bezugsziffern verwendet.

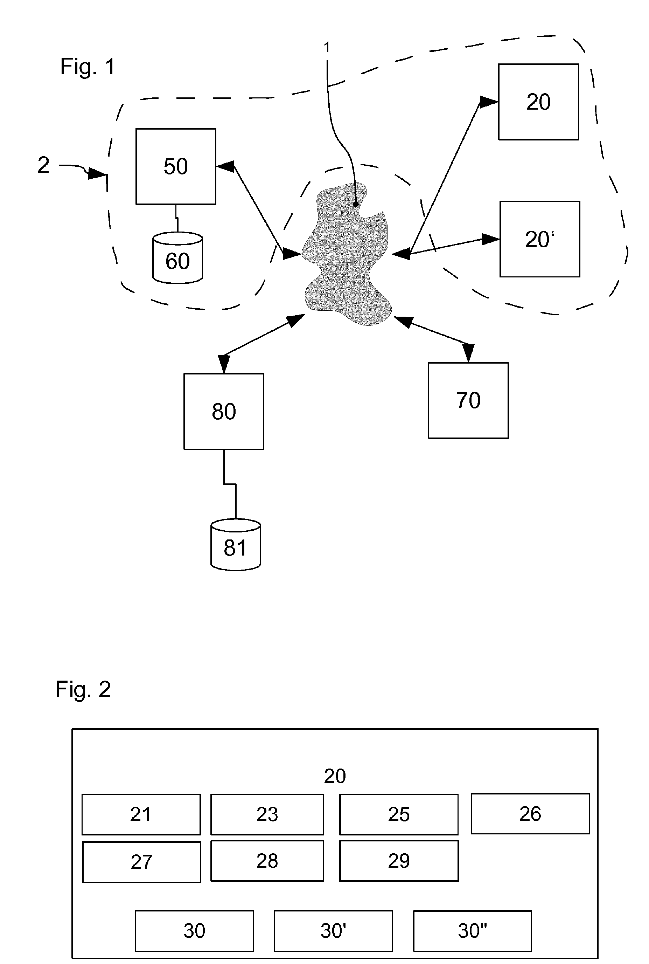

Fig. 1 zeigt ein erfindungsgemäßes System, bei dem eine Auftragsverwaltungseinrichtung 50 mit einer Vielzahl von Gepäckautomaten 20, 20' kommunikativ verbunden ist. In dem gezeigten Ausführungsbeispiel erfolgt die kommunikative Verbindung über ein öffentliches Netzwerk 1. Es ist denkbar, für die Kommunikation ein dediziertes Netzwerk, beispielsweise eine Verbindung per GSM oder UTMS oder eine Mischung aus dedizierten und öffentlichen Netzwerken zu verwenden. Gemäß der Fig. 1 verfügt die Auftragsverwaltungseinrichtung 50 über eine Auftragsdatenbank 60. Des Weiteren sind eine Vielzahl von internetfähigen Geräten, beispielsweise ein internetfähiges Mobiltelefon 70 mit dem Netzwerk verbunden.

Die Gepäckautomaten 20, 20' und die Auftragsverwaltungseinrichtung 50 können als Versandsystem 2 bezeichnet werden, das dazu geeignet ist, den Transport von Paketen zwischen den Gepäckautomaten 20, 20' zu gewährleisten. Das Versandsystem 2 umfasst zumindest die elektronische Infrastruktur, um einen entsprechenden Versand zu ermöglichen.

Die Auftragsverwaltungseinrichtung 50 kann über das öffentliche Netzwerk 1 mit dem Flugverwaltungssystem 80 kommunizieren, wobei das Flugverwaltungssystem 80 über eine Flugdaten-Datenbank 81 verfügt. Im beschriebenen Ausführungsbeispiel bietet das Flugverwaltungssystem 80 einen Webservice an, auf den mittels einer verschlüsselten Kommunikation zugegriffen werden kann. Theoretisch wäre es auch denkbar, die Kommunikation zwischen der Auftragsverwaltungseinrichtung 50 und dem Flugverwaltungssystem 80 über ein dediziertes Netzwerk abzuwickeln.

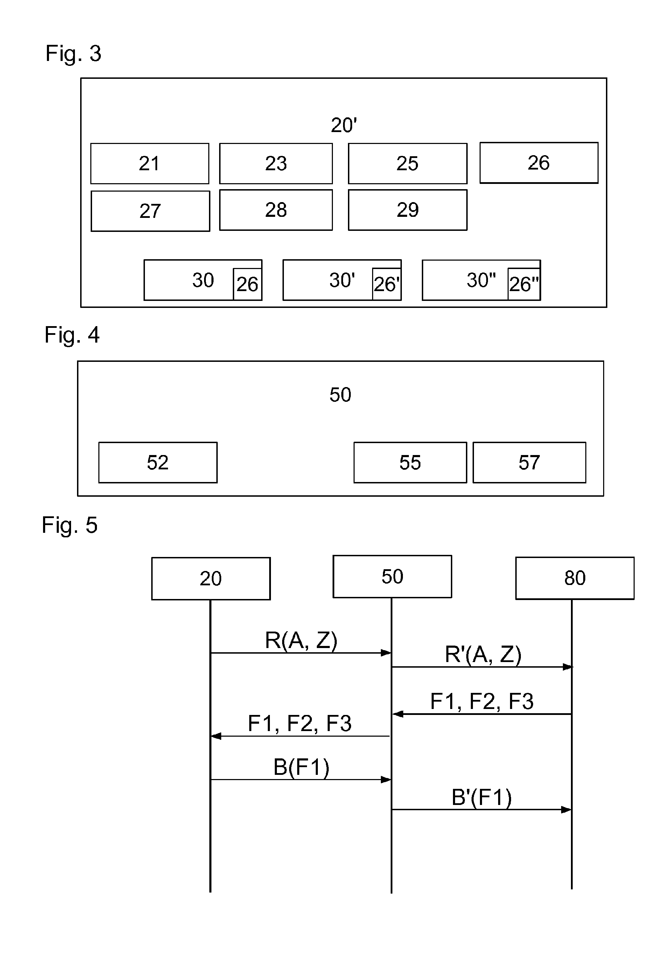

Die Fig. 2 und 3 zeigen zwei sich unterscheidende Ausführungsbeispiele eines Gepäckautomaten 20, 20'.

Der erste Gepäckautomat 20 gemäß der Fig. 2 umfasst eine Eingabeeinrichtung 21, beispielsweise eine Tastatur, eine Ausgabeeinrichtung 23, beispielsweise einen Monitor, eine Verarbeitungseinrichtung 25, eine Wiegeeinrichtung 26, eine Kommunikationseinrichtung 27 zur Kommunikation mit der Auftragsverwaltungseinrichtung 50, eine Speichereinrichtung 28 und einen Barcode-Drucker 29. Aufgrund der Verarbeitungseinrichtung 25 und der Speichereinrichtung 28 ist es dem ersten Gepäckautomaten 20 möglich, Programme zu speichern und auszuführen, die Teile des erfindungsgemäßen Verfahrens umsetzen. Theoretisch wäre es auch denkbar, dass ein Gepäckautomat 20, 20' sämtliche relevanten Verfahrensschritte durchführt. Die Eingabeeinrichtung 21 und/oder ein Barcode-Scanner können Eingaben empfangen. Theoretisch ist es denkbar, nur eine Eingabeeinrichtung 21 oder nur einen Barcode-Scanner vorzusehen. In dem beschriebenen Ausführungsbeispiel werden Daten über die Eingabeeinrichtung 21 Barcodeeingelesen.

Schließlich hat der erste Gepäckautomat 20 noch eine Vielzahl von Paketfächern 30, 30', 30", die sich über entsprechende Aktuatoren automatisch öffnen lassen. Optional können die Paketfächer 30, 30', 30" auch mit Sensoren ausgestattet sein, die es ermöglichen, den Verschlusszustand des jeweiligen Paketfachs 30, 30', 30" festzustellen.

In einem Ausführungsbeispiel ermöglicht es der erste Gepäckautomat 20 einem Benutzer, eine Zieladresse Z für den Versand eines Pakets über die Eingabeeinrichtung 21 einzugeben. Danach kann er auswählen, dass er den Transport des Pakets per Flugzeug wünscht. Hieraufhin wird er von dem ersten Gepäckautomaten 20 aufgefordert, das Paket auf die Wiegeeinrichtung 26 zu legen. Der PGepäckomat 20 erfasst das Gewicht und speichert die relevanten Daten, beispielsweise Zieladresse Z, Angaben über den Benutzer, Absenderadresse A und Gewicht.

In einer anderen Ausführungsform (vgl. Fig. 3) verfügt jedes Paketfach 30, 30', 30" über eine eigene Wiegeeinrichtung 26, 26', 26". Insofern kann sich das Aufgeben eines Pakets unter Verwendung dieses zweiten Gepäckautomaten 20' wie folgt gestalten. Der Benutzer authentifiziert sich an dem Gepäckautomaten 20' und gibt eine Zieladresse Z ein. Danach gibt er an, dass er einen Transport per Flugzeug wünscht. Der Gepäckautomat 20' registriert dies und fordert den Benutzer auf, eine Größe des Pakets anzugeben. Beispielsweise können die Menüpunkte "klein", "mittel" und "groß" jeweils zur Auswahl stehen. Der Benutzer nimmt eine entsprechende Eingabe vor, so dass der Gepäckautomat 20' ein geeignetes Paketfach 30, 30', 30" für das Paket auswählen kann. Beispielsweise kann das Paketfach 30' dazu geeignet sein, das Paket des Benutzers aufzunehmen. Der Gepäckautomat 20' öffnet dieses Paketfach 20', so dass der Benutzer das Paket einlegen und die zugehörige Tür wieder schließen kann. Daraufhin ermittelt der zweite Gepäckautomat 20' mit Hilfe der Wiegeeinrichtung 26' das Gewicht des Pakets und speichert diese Information zusammen mit weiteren relevanten Informationen.

Bei beiden Ausführungsformen kann der Gepäckautomat 20, 20' dazu ausgebildet sein, Informationen bezüglich der Postsendung beim Abholen dieser Auszudrucken. Hierbei kann es sich um Transportpapiere handeln, die für einen Transport per Flugzeug notwendig sind.

Fig. 4 zeigt einzelne Komponenten der erfindungsgemäßen Auftragsverwaltungseinrichtung 50. Diese umfassen ein SMS-Gateway 52, eine zentrale Verarbeitungseinrichtung 55 sowie eine zentrale Kommunikationseinrichtung 57. Des Weiteren oder stattdessen kann ein E-Mail-Gateway vorgesehen sein. Die zentrale Kommunikationseinrichtung 57 kann dazu eingesetzt werden, mit dem Gepäckautomaten 20, 20' sowie mit dem Flugverwaltungssystem 80 zu kommunizieren.

Einige relevante Schritte zur Aufgabe eines Pakets und zur Erstellung eines Versandauftrags sind in der Fig. 5 gezeigt. Hierbei handelt es sich um ein erstes Ausführungsbeispiel.

Rein exemplarisch wird in diesem Ausführungsbeispiel der Gepäckautomat 20 als der Gepäckautomat 20, 20' verwendet, der mit dem Benutzer kommuniziert.

Der Gepäckautomat 20 erfragt von einem Benutzer die Eingabe einer Zieladresse Z. Die Startadresse A kann ebenfalls von dem Benutzer vorgegeben werden oder von dem Gepäckautomaten 20 selbst ermittelt werden, da dieser einer bestimmten geografischen Position zugeordnet ist. Vorzugsweise befindet sich der Gepäckautomat 20 nahe einem Flughafen oder unmittelbar auf dem Gelände eines Flughafens. Bei der Startadresse A kann es sich insofern auch um eine Kennzeichnung handeln, die den entsprechenden Flughafen angibt. Der Gepäckautomat 20 verwendet die Startadresse A und die Zieladresse Z, um eine Anfrage R (A, Z) an die Auftragsverwaltungseinrichtung 50 abzugeben. Die Auftragsverwaltungseinrichtung 50 verarbeitet diese Anfrage R (A, Z) und übermittelt ihrerseits eine Anfrage R' (A, Z) an das Flugverwaltungssystem 80. Das Flugverwaltungssystem 80 prüft in der Flugdaten-Datenbank 81, welche Flugverbindungen zwischen der Startadresse A und der Zieladresse Z bestehen. In dem beschriebenen Ausführungsbeispiel handelt es sich bei der Zieladresse Z ebenfalls um einen Flughafen. In dem in Fig. 5 gezeigten Ausführungsbeispiel stellt das Flugverwaltungssystem 80 fest, dass innerhalb der nächsten 24 h drei Flüge existieren. Die Flugdaten F1, F2, F3 für jeden der Flüge werden von dem Flugverwaltungssystem 80 zusammengestellt und an die Auftragsverwaltungseinrichtung 50 übermittelt. Diese speichert die Flugdaten F1, F2, F3 und gibt sie an den Gepäckautomaten 20 weiter. Die Flugdaten F1, F2, F3 enthalten Ankunftszeiten sowie Preisangaben, die es dem Gepäckautomaten 20 ermöglichen, dem Benutzer entsprechende Ankunftszeiten für sein Paket und Kosten für den Transport anzuzeigen. Hierfür kann beispielsweise die Ausgabeeinrichtung 23 verwendet werden. Mittels der Eingabeeinrichtung 21 wählt der Benutzer den ersten Flug, dem die Flugdaten F1 zugeordnet sind, aus. Der Gepäckautomat 20 erstellt eine entsprechende Buchung B (F1), sendet diese an die Auftragsverwaltungseinrichtung 50, die die Buchung speichert und ihrerseits eine Buchung B' (F1) an das Flugverwaltungssystem 80 weitergibt.

Die Auftragsverwaltungseinrichtung 50 kann dann einen Paketabholer über die Buchung B' (F1) informieren. Dieser holt das Paket ab und transportiert es zu der Gepäckabfertigung der jeweiligen Fluggesellschaft. Dort kann eine Sicherheitskontrolle an dem Paket vorgenommen werden. Des Weiteren kann ein Wiegen des Pakets erfolgen. Der Paketabholer gibt also das Paket auf, so dass es mit dem Flugzeug transportiert werden kann.

Nach der Landung des Flugzeugs holt ein weiterer Paketabholer das Paket am Terminal ab, um dieses in einem weiteren Gepäckautomaten (20, 20'), beispielsweise dem zweiten Gepäckautomaten 20' zu deponieren.

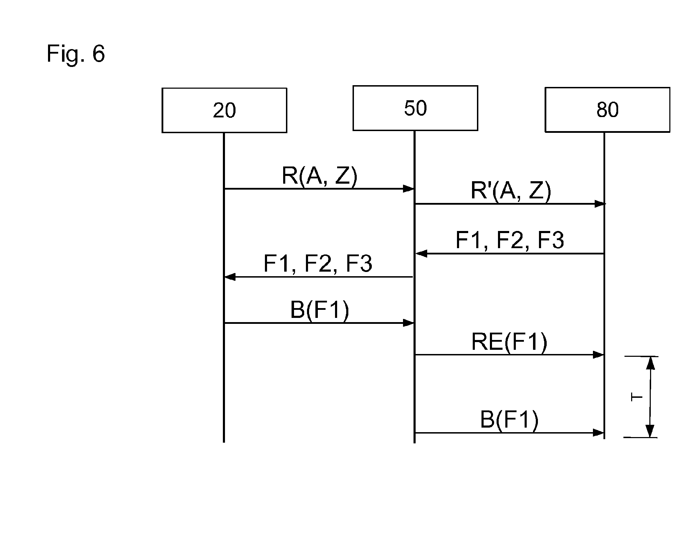

In einem anderen Ausführungsbeispiel (vgl. Fig. 6) wird wiederum die Startadresse A und die Zieladresse Z erfasst. Der erste Gepäckautomat 20 übermittelt eine Anfrage R (A, Z) an die Auftragsverwaltungseinrichtung 50, die eine überarbeitete Anfrage R' (A, Z) an das Flugverwaltungssystem 80 weiterleitet. Auch in diesem Ausführungsbeispiel identifiziert das Flugverwaltungssystem 80 drei mögliche Flüge, mittels derer das Paket transportiert werden könnte. Die entsprechenden Flugdaten F1, F2, F3 werden an die Auftragsverwaltungseinrichtung 50 und dann an den Gepäckautomaten 20 weitergeleitet. Der Benutzer gibt eine Buchung B (F1) auf, die von der Auftragsverwaltungseinrichtung 50 verarbeitet wird. Gegenüber der vorab beschriebenen Ausführungsform wird diese Buchung nicht unmittelbar an das Flugverwaltungssystem 80 weitergeleitet. Vielmehr nimmt die Auftragsverwaltungseinrichtung 50 eine Reservierung RE (F1) des ersten Flugs vor. Diese Reservierung RE (F1) wird von dem Flugverwaltungssystem 80 entgegengenommen und gespeichert. Die Auftragsverwaltungseinrichtung 50 kennt die Abflugszeit des ersten Flugs und wartet solange, bis davon ausgegangen werden kann, dass keine weiteren Buchungen von Passagieren zu erwarten sind. Nach dem Verstreichen eines Zeitintervalls T wird also überprüft, ob der reservierte Flug wahrgenommen werden kann. Soweit dies der Fall ist, führt die Auftragsverwaltungseinrichtung 50 eine entsprechende Buchung B' (F1) durch. Andernfalls kann die Auftragsverwaltungseinrichtung 50 derart konfiguriert sein, dass sie Buchungen und/oder Reservierungen des zweiten und dritten Flugs vornimmt. Auf diese Art und Weise kann sichergestellt werden, dass von den Fluggesellschaften ein hoher Grad an Flexibilität zur Nutzung der Flugzeuge für den Transport von Passagieren bereitsteht. Soweit ein Flugzeug nur teilweise durch den Passagierverkehr ausgelastet wird, ermöglicht es das erfindungsgemäße Versandsystem 2 verbleibende Kapazitäten durch den Pakettransport zu nutzen.

In dem zuletzt beschriebenen Ausführungsbeispiel wurde nach der Buchung B (F1) nur eine Reservierung RE (F1) an dem Flugverwaltungssystem 80 vorgenommen. Theoretisch wäre es jedoch auch denkbar, für alle innerhalb eines Zeitraums zur Verfügung stehenden Flüge Reservierungen vorzunehmen. Insofern könnte die Auftragsverwaltungseinrichtung 50 den ersten, den zweiten und den dritten Flug gleichzeitig reservieren. Soweit also ein Paket mit dem ersten Flug nicht transportiert werden kann, sind die weiteren Buchungen bereits vorhanden, so dass das Paket eine hohe Priorität genießen kann.

Das erfindungsgemäße Versandsystem 2 kann des Weiteren so ausgebildet sein, dass Passagierinformationen und Frachtraumnutzungsinformationen in regelmäßigen Intervallen von bestimmten Flügen abgefragt wird. Beispielsweise kann die Auftragsverwaltungseinrichtung 50 regelmäßig überprüfen, wie sich die Passagiersituation und die Ladesituation des ersten Flugs ausgestalten. Sobald es sich abzeichnet, dass die Ladekapazität des Flugzeugs erreicht wird, kann die Auftragsverwaltungseinrichtung 50 weitere Buchungen vornehmen. Ebenso kann sich die Auftragsverwaltungseinrichtung 50 um das Stornieren von unnötigen Buchungen kümmern, wenn ein bestimmtes Paket mit einem bestimmten Flugzeug bereits transportiert wurde oder es sicher ist, dass das Paket mit einem anderen Flug transportiert werden kann.

Erfindungsgemäß kann die Auftragsverwaltungseinrichtung 50 derart ausgestaltet sein, dass sie alle für den Transport eines Pakets notwendigen Unterlagen automatisch erstellt. Insofern ist es nicht notwendig, dass manuell Formulare ausgefüllt werden. Des Weiteren kann die Auftragsverwaltungseinrichtung 50 eine Kennzeichnung für das Paket bereitstellen, die für den gesamten Transport des Pakets von einem Gepäckautomaten 20, 20' zu einem anderen Gepäckautomaten 20, 20' verwendet werden kann. Diese Kennzeichnung kann über den Barcode-Drucker 29 ausgegeben und von dem Benutzer aufgeklebt werden. Theoretisch ist es auch denkbar, dass der Paketabholer die Kennzeichnung des Pakets vornimmt.

Diese Ausführungsform hat den Vorteil, dass Buchungsänderungen bei der Erstellung der Kennzeichnung berücksichtigt werden können.

Die Auftragsverwaltungseinrichtung 50 kann den Fortgang des Transports eines Pakets überwachen. Beispielsweise weiß die Paketverwaltungseinrichtung 50, welchem Flug ein bestimmtes Paket zugeordnet wurde und kann insofern eine relativ genaue Ankunftszeit vorgeben. Des Weiteren kann die Auftragsverwaltungseinrichtung 50 mit dem Flugverwaltungssystem 80 kommunizieren, um eine Änderung der Flugdauer zu detektieren und an den Benutzer weiterzugeben.

Auch die Be- und Entladevorgänge der Paketabholer können von der Auftragsverwaltungseinrichtung 50 erfasst und an den Benutzer weitergegeben werden. Beispielsweise kann der Status des Pakets regelmäßig per SMS und/oder E-Mail, beispielsweise unter Verwendung des SMS-Gateways 52 bzw. E-Mail-Gateways, an den Benutzer kommuniziert werden. Ebenso können entsprechende Status-Angaben an den Empfänger des Pakets kommuniziert werden. Zumindest kann die Auftragsverwaltungseinrichtung 50 dazu ausgebildet sein, nach der Deponierung des Pakets in dem ZielGepäckautomaten den Empfänger per SMS oder über eine beliebige andere elektronische Nachricht zu informieren.

Bei den beschriebenen Ausführungsbeispielen wurde darauf verzichtet, die Kommunikation des Gewichts des Pakets explizit zu erwähnen. Entsprechende Daten können jedoch von dem Gepäckautomaten 20 an die Auftragsverwaltungseinrichtung 50 und/oder an das Flugverwaltungssystem 80 kommuniziert werden. Das Gewicht kann auch für die Auswahl der bereitstehenden Flugverbindungen relevant sein. Des Weiteren kann das Gewicht Teil der Flugbuchungen und/oder Reservierungen sein. Insbesondere kann die Auftragsverwaltungseinrichtung 50 dazu ausgebildet sein, konkrete Angaben über das Gewicht des jeweils zu transportierenden Pakets zu machen, so dass die Fluggesellschaft bei der Durchführung eines bestimmten Flugs genau weiß, welches Gewicht die zu transportierende Ladung hat.

An dieser Stelle sei darauf hingewiesen, dass alle oben beschriebenen Teile bzw. Komponenten für sich allein gesehen oder in Kombination als erfindungswesentlich beansprucht werden. Entsprechendes gilt für die einzelnen beschriebenen Verfahrensschritte.

### Bezugszeichenliste

- 1: Netzwerk
- 2: Versandsystem
- 20, 20': Gepäckautomat
- 21: Eingabeeinrichtung
- 23: Ausgabeeinrichtung
- 25: Verarbeitungseinrichtung
- 26, 26', 26": Wiegeeinrichtung
- 27: Kommunikationseinrichtung
- 28: Speichereinrichtung
- 29: Barcode-Drucker
- 30, 30', 30": Paketfach
- 50: Auftragsverwaltungseinrichtung
- 52: SMS-Gateway
- 55: Zentrale Verarbeitungseinrichtung
- 57: Zentrale Kommunikationseinrichtung
- 60: Auftragsdatenbank
- 70: Mobilfunktelefon
- 80: Flugverwaltungssystem
- 81: Flugdaten-Datenbank
- A: Startadresse
- B, B': Buchung
- F1, F2, F3: Flugdaten
- R, R': Auftrag
- RE: Reservierung
- T: Zeitintervall
- Z: Zieladresse

## Patentansprüche

1. System für den Versand von Postsendungen, umfassend:
- mindestens einen Gepäckautomaten (20, 20') mit mindestens einer Eingabeeinrichtung (21) und/oder Erfassungseinrichtung (29) zur Eingabe bzw. Erfassung einer Zieladresse und mit einer Vielzahl von Paketfächern (30, 30', 30") zur Aufnahme einer Postsendung,
- mindestens eine Auftragsverwaltungseinrichtung (50) zum Empfangen einer Anfrage (A) des mindestens einen Gepäckautomaten (20, 20'), wobei die Anfrage eine Zieladresse (Z) und eine Startadresse (A) umfasst,
**dadurch gekennzeichnet, dass**
die Auftragsverwaltungseinrichtung (50) dazu ausgebildet ist,
anhand der Zieladresse (Z) und anhand der Startadresse (A) mindestens eine Flugverbindung zu ermitteln und mit einem Flugverwaltungssystem (80) zu kommunizieren, um mindestens eine Flugreservierung unter Verwendung von Flugdaten (F1, F2, F3), die die Flugverbindung angeben, vorzunehmen.

2. System nach Anspruch 1,
**dadurch gekennzeichnet, dass**
der mindestens eine Gepäckautomat (20, 20') mindestens eine Wiegeeinrichtung (26, 26', 26") zur Ermittlung eines Gewichts einer Postsendung umfasst und die Auftragsverwaltungseinrichtung (50) zur Vornahme der Flugreservierung das Gewicht einer Postsendung an das Flugverwaltungssystem (80) kommuniziert.

3. System nach einem der vorhergehenden Ansprüche,
**dadurch gekennzeichnet, dass**
eine Vielzahl der Paketfächer (30, 30', 30") eines Gepäckautomaten (20, 20') mit jeweils einer Wiegeeinrichtung (26, 26', 26") zur Ermittlung eines Gewichts einer Postsendung ausgestattet ist.

4. System nach einem der vorhergehenden Ansprüche,
**dadurch gekennzeichnet, dass**
mindestens einer Eingabeeinrichtung (21) und/oder Erfassungseinrichtung (29) zur Eingabe von Abmessungsdaten bzw. zur Ermittlung von Abmessungsdaten einer Postsendung ausgebildet sind,
und die Auftragsverwaltungseinrichtung (50) zur Vornahme der Flugreser-vierung die Abmessungsdaten einer Postsendung an das Flugverwaltungssystem (80) kommuniziert.

5. System nach einem der vorhergehenden Ansprüche, insbesondere nach Anspruch 4,
**dadurch gekennzeichnet, dass**
der mindestens eine Gepäckautomat (20, 20') dazu ausgebildet ist, in Abhängigkeit von einer/den Abmessungsdaten ein Paketfach (30, 30', 30")) zur Aufnahme der Postsendung auszuwählen und/oder zu öffnen.

6. System nach einem der vorhergehenden Ansprüche,
**dadurch gekennzeichnet, dass**
die Auftragsverwaltungseinrichtung (50) dazu ausgebildet ist, anhand der Zieladresse (Z) und der Startadresse (A) eine Vielzahl von Flugverbindungen zu ermitteln und der mindestens eine Gepäckautomat (20, 20') dazu ausgebildet ist, die Vielzahl von Flugverbindungen und/oder flugverbindungsspeziefische Daten, insbesondere einen Transportpreis und/oder eine Ankunftszeit, anzuzeigen und eine Eingabe zur Auswahl einer Flugverbindung aus der Vielzahl von Flugverbindungen zu empfangen.

7. System nach einem der vorhergehenden Ansprüche,
**dadurch gekennzeichnet, dass**
die Auftragsverwaltungseinrichtung (50) dazu ausgebildet ist, mit dem Flugverwaltungssystem zu kommunizieren, um für die mindestens eine Flugverbindung eine Ankunftszeit zu ermitteln.

8. System nach einem der vorhergehenden Ansprüche,
**gekennzeichnet durch**
mindestens eine Druckeinrichtung, insbesondere einen QR-Codedrucker und/oder einen Barcodedrucker (29), vorzugsweise pro Gepäckautomat, zur Ausgabe einer Kennzeichnung.

9. System nach einem der vorhergehenden Ansprüche,
**dadurch gekennzeichnet, dass**
die Auftragsverwaltungseinrichtung (50) dazu ausgebildet ist, vorzugsweise nach der Vornahme der Flugreservierung, Passagierdaten und/oder Frachtraumbelegungsdaten von dem Flugverwaltungssystem abzufragen und basierend auf den Passagierdaten und/oder Frachtraumbelegungsdaten ein Buchung für eine Postsendung vorzunehmen.

10. System
umfassend:
ein System nach einem der Ansprüche 1 bis 9 sowie eine Flugverwaltungssystem (80) mit mindestens einer Datenbank (81) zum Speichern von Flugdaten (F1, F2, F3) und mit einer Schnittstelle zum Empfangen von Flugreservierungen.

11. Verfahren, insbesondere zur Ausführung auf einem System nach einem der vorhergehenden Ansprüche, umfassend die Schritte:
a) Empfangen einer Anfrage eines Gepäckautomaten (20, 20'), wobei die Anfrage eine Zieladresse (Z) und eine Startadresse (A) umfasst;
b) Ermitteln mindestens einer Flugverbindung durch eine Auftragsverwaltungseinrichtung (50) unter Verwendung der Zieladresse (Z) und der Startadresse (A);
c) Durchführung einer Flugreservierung und/oder einer Flugbuchung unter Verwendung von Flugdaten (F1, F2, F3), die die Flugverbindung angeben.

12. Verfahren nach Anspruch 11,
**gekennzeichnet durch**:
- ein Erfassen eines Gewichts einer Postsendung **durch** eine Wiegeeinrichtung (26, 26', 26") und
- ein Kommunizieren des Gewichts an die Auftragsverwaltungseinrichtung (50) zur Durchführung der Flugreservierung und/oder Flugbuchung.

13. Verfahren nach Anspruch 11 oder 12,
**gekennzeichnet durch**:
- ein Erfassen von Abmessungsdaten einer/der Postsendung, insbesondere **durch** ein Empfangen einer Auswahl einer Paketfachgröße an einem Gepäckautomaten (20, 20').

14. Verfahren nach einem der Ansprüche 11 bis 13,
**gekennzeichnet durch**:
d) ein Ermitteln einer Ankunftszeit einer/der Postsendung unter Verwendung der Flugdaten;
e) ein Anzeigen der Ankunftszeit, vorzugsweise auf einer Anzeige (23) des Gepäckautomaten (20, 20').

15. Computerlesbares Medium mit Instruktionen zur Implementierung des Verfahrens nach einem der Ansprüche 11 bis 15, wenn die Instruktionen ausgeführt werden.
